# EUROPÄISCHE PATENTSCHRIFT

(11) **EP 3 524 421 B1**
(45) Veröffentlichungstag und Bekanntmachung des Hinweises auf die Patenterteilung: **10.09.2025**
(21) Anmeldenummer: 19153659.8
(22) Anmeldetag: 25.01.2019
(51) Int. Cl.: B30B 15/26, B21D 37/14

(54) **PRESSE UND VERFAHREN ZU DEREN BETRIEB**
PRESS AND METHOD FOR ITS OPERATION
PRESSE ET SON PROCÉDÉ DE FONCTIONNEMENT

(30) Priorität: 08.02.2018 DE 102018102809
(43) Veröffentlichungstag der Anmeldung: 14.08.2019
(73) Patentinhaber: ANDRITZ Schuler Pressen GmbH, 73033 Göppingen (DE)
(72) Erfinder: Schöllhammer, Dietmar, 73035 Göppingen (DE); Kreth, Uwe, 73033 Göppingen (DE)
(74) Vertreter: Rüger Abel Patentanwälte PartGmbB

(56) Entgegenhaltungen:
- EP-A1- 1 688 196
- DE-A1- 102016 205 704
- JP-A- 2002 263 742
- US-A1- 2011 094 279
- US-A1- 2011 132 208
- US-A1- 2013 231 770

## Beschreibung

Die Erfindung betrifft eine Presse zum Umformen von Werkstücken sowie ein Verfahren zum Betreiben der Presse.

Pressen zum Umformen von Werkstücken, beispielsweise mit einer Zieheinrichtung zum Tiefziehen eines Werkstücks, sind in vielfältigen Ausgestaltungen bekannt. Die Presse weist eine Arbeitseinheit auf, die den Umformvorgang abhängig von Pressenbetriebswerten ausführt. Die Arbeitseinheit weist allgemein einen oder mehrere Antriebe bzw. Aktoren auf, um die Umformung zu bewirken. Die Arbeitseinheit kann hierzu beispielsweise einen Pressenantrieb zum Bewegen eines Stößels mit einem Oberwerkzeug und/oder eine Zieheinrichtung, beispielsweise ein Ziehkissen mit einem Unterwerkzeug, aufweisen. Bei jeder Umformaufgabe für das Umformen eines Werkstücks müssen die Einstellungen der Presse zunächst an die aktuelle Umformaufgabe angepasst werden.

Die Pressenbetriebswerte für die Arbeitseinheit der Presse sind beispielsweise die zwischen einem Oberwerkzeug und einem Unterwerkzeug beim Umformen eines Werkstücks auftretende Kraft, die Geschwindigkeit und/oder die Beschleunigung eines Oberwerkzeugs und/oder eines Unterwerkzeugs zum Umformen des Werkstücks oder damit zusammenhängende Größen. Diese Pressenbetriebswerte müssen an die Umformaufgabe angepasst werden, um umgeformte Werkstücke innerhalb der geforderten Toleranz und mit der geforderten Oberflächenqualität herzustellen. Heutzutage wird hierfür erfahrenes Bedienpersonal der Presse eingesetzt, das zunächst in einem Einstellbetrieb wiederholt ein Werkstück umformt und das umgeformte Werkstück begutachtet. Abhängig vom Ergebnis der Begutachtung werden aufgrund der Erfahrung der Bedienperson ein oder mehrere Pressenbetriebswerte angepasst, um ein umgeformtes Werkstück mit der erforderlichen Genauigkeit und der gewünschten Qualität zu erreichen. Bei einem solchen Einstellbetrieb einer Presse kann es vorkommen, dass erhebliche Mengen an Material verbraucht werden, die als Abfallteile entsorgt oder der Wiederverwertung zugeführt werden müssen. Außerdem benötigt das Einstellen im Einstellbetrieb sehr erfahrenes Personal und kann zeitraubend sein. Das Einstellen einer Presse an eine neue Umformaufgabe ist mithin aufwendig und kostenintensiv.

DE 10 2016 205 704 A1 beschreibt eine Presse und ein Verfahren laut dem Oberbegriff des Anspruchs 1 und 14 bzw., mehr insbesondere offenbart sie ein ein Verfahren zum Steuern eines Umformprozesses und eine Umformeinrichtung. Umformparameter am umgeformten Bauteil werden bildlich erfasst und Fehler erkannt. Ein Wirkzusammenhangmodell beschreibt einen Zusammenhang zwischen den Umformparametern der Umformeinrichtung und den erfassten Bilddaten. Dadurch kann über das Wirkzusammenhangmodell eine Korrektur der Einstellungen der Umformeinrichtung vorgenommen werden.

Aus US 2013/0231770 A1 ist es bekannt, in einer Parameterdatenbank einer Kombination von an einer Presse eingestellten Pressenbetriebswerten eine Wahrscheinlichkeit für eine fehlerfreie Umformung zuzuordnen. Durch Verändern der Pressenbetriebswerte kann gezielt die Wahrscheinlichkeit für eine fehlerfreie Umformung erhöht werden.

EP 1 688 196 A1 beschreibt einen Zusammenhang zwischen Abweichungen von Materialeigenschaften eines umzuformenden Materials und Standardeinstellungen an einer Umformvorrichtung. Durch Simulation, Messungen der Materialeigenschaften oder dergleichen werden die tatsächlichen Material- bzw. Werkstückparameter erfasst und daraufhin werden aufgrund des bekannten Zusammenhangs mit den Einstellungen der Umformvorrichtung Anpassungen vorgenommen. Der Zusammenhang kann in Form einer Beeinflussungsmatrix vorgegeben sein.

JP 2002-263742 A offenbart eine Presse und ein Pressverfahren zum Tiefziehen. Es wird eine Fuzzy-Steuerung eingesetzt, die beispielsweise den Einfluss einer nicht bleibenden elastischen Rückfederung des Werkstücks und dem Hub des Stempels steuerungstechnisch abbilden kann.

US 2011/132208 A1 offenbart ein Verfahren zum Betreiben einer Servopresse. Über eine Messeinrichtung wird der Umformzustand des Werkstücks erfasst und die Bewegung des Stößels der Servopresse abhängig davon gesteuert. Zur Steuerung kann eine Tabelle verwendet werden, die einen Zusammenhang zwischen der Stößelposition und einem Servomotordrehwinkel angibt.

Es kann als Aufgabe der vorliegenden Erfindung angesehen werden, eine Presse und ein Verfahren zu deren Betrieb zu schaffen, die ein verbessertes Einstellen der Pressenbetriebswerte ermöglicht.

Diese Aufgabe wird durch eine Presse mit den Merkmalen des Patentanspruches 1 sowie ein Verfahren mit den Merkmalen des Patentanspruches 14 gelöst.

Die Presse weist ein Oberwerkzeug und ein Unterwerkzeug zum Umformen eines Werkstücks auf. Eine Arbeitseinheit der Presse ist durch eine Steuereinrichtung ansteuerbar und dazu eingerichtet, den Umformvorgang des Werkstücks basierend auf Pressenantriebswerten auszuführen. Hierfür weist die Arbeitseinheit einen oder mehrere Antriebe bzw. Aktoren auf, insbesondere um das Oberwerkzeug und das Unterwerkzeug relativ zueinander zu bewegen bzw. gegen das Werkstück zu pressen. Zu der Arbeitseinheit können optional auch Transfereinrichtungen gehören, die zum Transport des Werkstücks in das Werkzeug und/oder aus dem Werkzeug eingerichtet sind. Die genaue Ausführung der Arbeitseinheit hängt dabei von der Ausführung der Presse ab. Beispielsweise kann die Arbeitseinheit eine Zieheinrichtung aufweisen. Während des Tiefziehens kann das Oberwerkzeug und/oder das Unterwerkzeug zum Umformen des Werkstücks relativ zu einem Pressengestell der Presse bewegt werden.

Wenigstens ein Werkstückparameter charakterisiert das Werkstück in seinem noch nicht umgeformten Ausgangszustand und/oder in seinem umgeformten Zustand. Beispielsweise kann der wenigstens eine Werkstückparameter eine oder mehrere der nachfolgend genannten Eigenschaften des Werkstücks beschreiben:
- eine Abmessung des umgeformten Werkstücks, beispielsweise ein Einzug oder eine Dicke bzw. Wandstärke,
- ein verwendetes Material des Werkstücks,
- ein Qualitätsmerkmal des Werkstücks, beispielsweise die Rauheit eines Flächenabschnitts des umgeformten Werkstücks,
- das Vorhandensein oder nicht Vorhandensein von Wellen oder Falten in einem Flächenabschnitt des umgeformten Werkstücks,
- das Vorhandensein oder nicht Vorhandensein von einem oder mehreren Rissen in einem Flächenabschnitt des umgeformten Werkstücks.

Der Zusammenhang zwischen solchen Werkstückparametern und den Pressenbetriebswerten ist in der Regel komplex und mathematisch nicht oder nur sehr aufwendig zu beschreiben. Erfindungsgemäß ist es daher vorgesehen, zwischen jedem in der Steuereinrichtung definierten Pressenbetriebswert und jedem in der Steuereinrichtung definierten Werkstückparameter einen Zusammenhang zu unterstellen und diesen Zusammenhang durch jeweils eine individuell veränderbare Funktion einer Verknüpfungsmatrix zu beschreiben. Bei einer Anzahl von n Pressenbetriebswerten und bei einer Anzahl von m Werkstückparametern ergibt sich somit eine Verknüpfungsmatrix von individuell veränderbaren Funktionen mit n x m Matrixelementen bzw. individuell veränderbaren Funktionen. Dabei ist sowohl n, als auch m jeweils eine natürliche Zahl größer als null.

Die Steuereinrichtung ist dazu eingerichtet, die Pressenbetriebswerte basierend auf der Verknüpfungsmatrix und somit allen vorhandenen Funktionen zu ermitteln und an die Arbeitseinheit auszugeben.

Somit ist eine maximale Flexibilität beim Einstellen der Presse erreicht. Über die individuell veränderbaren Funktionen kann ein bekannter oder festgestellter tatsächlicher Zusammenhang zwischen einem jeweiligen Werkstückparameter und einem jeweiligen Pressenbetriebswert eingestellt werden. Eine Funktion kann auch definieren, dass zwischen einem jeweiligen Pressenbetriebswert und einem jeweiligen Werkstückparameter kein Zusammenhang besteht.

Dem Bedienpersonal einer Presse wird für den Einstellbetrieb daher eine Vielzahl nutzbarer Verknüpfungen zwischen den vordefinierten Pressenbetriebswerten und den vordefinierten Werkstückparametern zur Verfügung gestellt. Es müssen aber nicht alle Funktionen der Verknüpfungsmatrix tatsächlich auch eingestellt bzw. angepasst werden. Vorzugsweise wird nur ein Teil der Funktionen eine Abhängigkeit zwischen dem jeweils zugeordneten Pressenbetriebswert und dem jeweils zugeordneten Werkstückparameter beschreiben, die von dem Bedienpersonal vorgegeben oder modifiziert werden kann. An einer Bedienschnittstelle können beispielsweise nur diese eine Abhängigkeit beschreibenden Funktionen als modifizierbar angezeigt werden. Es versteht sich, dass das Bedienpersonal auch weitere Funktionen als modifizierbar auswählen kann, die ursprünglich eine Unabhängigkeit zwischen dem jeweils zugeordneten Pressenbetriebswert und dem jeweils zugeordneten Werkstückparameter beschreiben, und/oder eine Funktion, die eine Abhängigkeit zwischen dem jeweils zugeordneten Pressenbetriebswert und dem jeweils zugeordneten Werkstückparameter beschreibt, zurücksetzen kann, um eine Unabhängigkeit zu definieren.

Wenn A-Priori-Wissen vorhanden ist, können einige der Funktionen die entsprechend bekannte Abhängigkeit oder Unabhängigkeit zwischen dem jeweiligen Werkstückparameter und dem jeweiligen Pressenbetriebswert zumindest näherungsweise beschreiben. Alle Funktionen der Verknüpfungsmatrix, bei denen nicht oder noch nicht bekannt ist, ob ein bzw. welcher Zusammenhang zwischen einem jeweiligen Werkstückparameter und einem jeweiligen Pressenbetriebswert besteht, können in einem Ausgangszustand eine Unabhängigkeit zwischen dem jeweiligen Pressenbetriebswert und dem jeweiligen Werkstückparameter definieren.

Als A-Priori-Wissen können beispielsweise Einstellungen von Pressen mit ähnlichen Umformaufgaben und/oder Pressen desselben Pressentyps und/oder Pressen mit vergleichbaren Umgebungsbedingungen an die Steuereinrichtung übermittelt werden. Durch das Verwenden von A-Priori-Wissen kann der Einstellbetrieb vereinfacht und verkürzt werden.

Es ist bevorzugt, wenn jede individuell veränderbare Funktion in einem Ausgangszustand eine Unabhängigkeit zwischen dem jeweiligen Pressenbetriebswert und dem jeweiligen Werkstückparameter definiert. Solange kein Wissen über die Zusammenhänge zwischen den Pressenbetriebswerten und den Werkstückparametern vorliegt, befinden sich sämtliche Funktionen in einem entsprechenden Ausgangszustand. Im Ausgangszustand gibt eine Funktion für alle Werte des betreffenden Werkstückparameters denselben Wert für den Pressenbetriebswert aus und kann mithin eine konstante Funktion darstellen. Die Funktion kann in ihrem Ausgangszustand somit eine Gerade mit der Steigung null sein. Wenn eine Funktionen einen ermittelten oder bekannten Zusammenhang zwischen einem Werkstückparameter und einem Pressenbetriebswert beschreibt und sich nicht im Ausgangszustand befindet, kann die Funktion zumindest abschnittsweise eine Steigung ungleich null haben und kann z.B. durch eine Gerade, mehrere abschnittsweise gerade Abschnitte oder eine andere Kurvenform gebildet sein. Bei einem Ausführungsbeispiel können sämtliche Funktionen durch jeweils eine Gerade und/oder mehrere abschnittsweise gerade Abschnitte abgebildet oder angenähert werden.

Vorzugsweise beschreibt jede Funktion eine - insbesondere konstante - prozentuale Veränderung eines jeweiligen Pressenbetriebswerts abhängig von einer gegebenen prozentualen Veränderung des jeweiligen Werkstückparameters. Dadurch ist eine einfache Vorgabe des Zusammenhangs möglich, ohne komplexe mathematische Modelle aufzustellen. Durch unterschiedliche Kurvenverläufe bzw. Steigungen der Funktionen, ergibt sich eine Gewichtung zwischen den einzelnen Funktionen. Beispielsweise kann ein Werkstückparameter von mehreren Betriebskennwerten abhängen. Für jede Abhängigkeit ist eine Funktion vorgegeben, deren Verlauf bzw. Steigung unterschiedlich sein kann. Auf diese Weise ergibt sich eine Gewichtung der Einflüsse der unterschiedlichen Pressenbetriebswerte auf denselben Werkstückparameter.

Bei einem Ausführungsbeispiel ist die Steuereinrichtung zum Empfang von Eingangsdaten eingerichtet. Die Eingangsdaten können den tatsächlichen Zusammenhang zwischen wenigstens einem der Pressenbetriebswerte und wenigstens einem der Werkstückparameter charakterisieren. Die Steuereinrichtung ist dazu eingerichtet, die jeweils wenigstens eine zugeordnete Funktion an diesen tatsächlichen Zusammenhang anzupassen. Die Eingangsdaten können beispielsweise durch eine Bedienperson über eine Bedienschnittstelle eingegeben werden. Die Eingangsdaten können auch von einer externen Datenquelle über eine Kommunikationsverbindung empfangen werden. Beispielsweise kann die Presse über eine Kommunikationsverbindung mit einem Netzwerk kommunizieren und darüber Eingangsdaten, insbesondere Betriebs- und Einstelldaten anderer Pressen, empfangen und abhängig davon die eigenen Einstellungen aktualisieren bzw. optimieren.

Es ist vorteilhaft, wenn die Presse eine Erfassungseinrichtung aufweist. Die Erfassungseinrichtung ist dazu eingerichtet, ein Erfassungssignal zu erzeugen und an die Steuereinrichtung weiterzuleiten. Das Erfassungssignal beschreibt wenigstens einen oder auch mehrere der in der Steuereinrichtung definierte Werkstückparameter. Existiert zu diesem wenigstens einen Werkstückparameter eine Funktion in der Verknüpfungsmatrix, die die Abhängigkeit zu einem zugeordneten Pressenbetriebswert vorgibt, kann die Steuereinrichtung eine automatische Anpassung des Pressenbetriebswerts durchführen, beispielsweise wenn ein Werkstückparameter sich im Laufe einer Produktion zunehmend einer Toleranzgrenze annähert.

Die Erfassungseinrichtung kann bei einem Ausführungsbeispiel einen Sensor, insbesondere einen optischen Sensor aufweisen, um ein Erfassungssignal zu erzeugen. Bei einem optischen Sensor kann es sich beispielsweise um einen Scanner oder eine Kamera handeln. Die vom Scanner aufgenommenen Scannerdaten eines umgeformten Werkstücks und/oder ein von der Kamera aufgenommenes Bild des umgeformten Werkstücks werden an die Steuereinrichtung weitergeleitet, um in der Steuereinrichtung aus dem betreffenden Erfassungssignal (Scannerdaten bzw. Bild) einen oder mehrere Werkstückparameter zu ermitteln. Vorzugsweise ist die Erfassungseinrichtung dazu eingerichtet, ein Erfassungssignal aufzunehmen, solange sich das Werkstück im Bereich zwischen dem Unterwerkzeug und dem Oberwerkzeug befindet, nachdem das Oberwerkzeug und das Unterwerkzeug im Anschluss an dem Umformvorgang voneinander entfernt werden oder entfernt worden sind. Das Erfassungssignal kann auch aufgenommen werden, während das Werkstück bewegt wird, beispielsweise durch eine Transfereinrichtung der Presse. Vorzugsweise wird das umgeformte Werkstück erst anschließend ausgeworfen und aus der Presse transferiert.

Wie bereits erwähnt, kann die Arbeitseinheit eine Zieheinrichtung aufweisen. Die Zieheinrichtung kann zur Einstellung eines Ziehkraftwertes und/oder eines Ziehkraftverlaufs eingerichtet sein. Der Ziehkraftwert und/oder der Ziehkraftverlauf können durch jeweils einen oder durch mehrere Pressenbetriebswerte definiert sein.

Es ist auch möglich, dass die Zieheinrichtung zur Einstellung unterschiedlicher Ziehkraftwerte an unterschiedlichen Stellen des Oberwerkzeugs und des Unterwerkzeugs eingerichtet ist. Beispielsweise können das Oberwerkzeug und das Unterwerkzeug an unterschiedlichen Positionen mit unterschiedlichen Ziehkräften oder unterschiedlichen Ziehkraftverläufen gegeneinander bzw. gegen das Werkstück gedrückt werden. Diese positionsabhängigen Ziehkraftwerte oder Ziehkraftverläufe können durch einen oder mehrere Pressenbetriebswerte gekennzeichnet sein.

Bei einem Ausführungsbeispiel kann die Arbeitseinheit außerdem eine Schmiereinrichtung aufweisen. Die Schmiereinrichtung ist dazu eingerichtet, ein Schmiermittel in einer vorgegebenen Menge vor dem Umformen auf das Werkstück aufzubringen. Das Schmiermittel kann beispielsweise aufgesprüht werden.

Die Arbeitseinheit kann eine Antriebseinrichtung aufweisen, die dazu eingerichtet ist, das Oberwerkzeug und das Unterwerkzeug relativ zueinander zu bewegen. Die Antriebseinrichtung kann beispielsweise einen Pressenantrieb zur Bewegung eines Stößels aufweisen, an dem das Oberwerkzeug angeordnet ist. Die Antriebseinrichtung kann auch eine Einrichtung zum Bewegen des Unterwerkzeugs aufweisen, beispielsweise ein Ziehkissen. Die Antriebseinrichtung kann beispielsweise eine Zieheinrichtung der Arbeitseinheit bilden. Abhängig vom Pressentyp kann das Unterwerkzeug in Hubrichtung des Stößels feststehend an einem Pressentisch angeordnet sein. Abhängig vom Pressentyp kann das Unterwerkzeug oder das Oberwerkzeug während der Umformung des Werkstücks stillstehen.

Bei einem Ausführungsbeispiel kann die Antriebseinrichtung zur Einstellung der Position und/oder einer zeitlichen Ableitung der Position des Oberwerkzeugs bzw. des Unterwerkzeugs eingerichtet sein. Die betreffende Position und/oder deren zeitliche Ableitung kann durch jeweils einen oder mehrere Pressenbetriebswerte gekennzeichnet sein. Die zeitliche Ableitung der Position kann die Geschwindigkeit, die Beschleunigung oder die Beschleunigungsänderung (Ruck) sein.

Als Werkstückparameter kann beispielsweise eine Dimension des umgeformten Werkstücks verwendet werden. Der Werkstückparameter kann beispielsweise einen Einzug, also eine Randbreite eines nicht umgeformten flachen Randes am umgeformten Werkstück beschreiben. Auch andere Dimensionen oder Abmessungen am umgeformten Werkstück können als Werkstückparameter verwendet werden, beispielsweise die Dicke des umgeformten Werkstücks an einer oder mehreren Stellen.

Als Werkstückparameter können auch ein Material und/oder eine Beschichtung des Werkstücks beschreibende Eigenschaften verwendet werden. Abhängig vom Material oder einer Beschichtung können sich unterschiedliche Reibungen zwischen dem Werkstück und den Werkzeugen ergeben, was Einfluss auf die Umformung hat und beispielsweise im Vergleich zu anderen Materialien höhere oder niedrigere Haltekräfte beim Tiefziehen erforderlich machen kann.

Zumindest einer der Werkstückparameter kann auch die Qualität eines umgeformten Werkstücks beschreiben. Die Qualität kann beispielsweise dadurch beschrieben werden, dass ein Werkstückparameter angibt, ob in einem Flächenabschnitt des umgeformten Werkstücks Wellen und/oder Falten und/oder wenigstens ein Riss auftritt. Anhand dieser Angaben kann auf eine zu hohe oder eine zu niedrige Haltekraft beim Umformen des Werkstücks, insbesondere beim Tiefziehen, geschlossen werden.

Beim Betrieb der vorstehend beschriebenen Presse werden stets sämtliche der vorhandenen Funktionen verwendet, um die definierten Pressenbetriebswerte abhängig von den definierten Werkstückparametern zu ermitteln und an die Arbeitseinheit der Presse auszugeben. Besteht für bestimmte Pressenbetriebswerte mit bestimmten Werkstückparametern kein - oder kein bislang bekannter - Zusammenhang, so wird die zugeordnete Funktion derart definiert, dass sie unabhängig von dem jeweiligen Werkstückparameter den zugeordneten Pressenbetriebswert unverändert lässt. Die Presse ist somit dazu eingerichtet, abhängig von der aktuellen Umformaufgabe, jeden möglichen Zusammenhang zwischen einem Pressenbetriebswert und einem Werkstückparameter berücksichtigen zu können und bei der Durchführung der Umformung zu verwenden.

Vorteilhafte Ausgestaltungen der Presse und des Verfahrens ergeben sich aus den abhängigen Ansprüchen, der Beschreibung und den Zeichnungen. Nachfolgend werden bevorzugte Ausführungsbeispiele einer Presse und eines Verfahrens zum Betreiben der Presse anhand der beigefügten Zeichnungen im Einzelnen erläutert. Es zeigen:
Figur 1 eine blockschaltbildähnliche Prinzipdarstellung eines Ausführungsbeispiels einer Presse,
Figur 2 eine in der Steuereinrichtung der Presse aus Figur 1 abgespeicherte Funktionsmatrix,
Figur 3 eine Funktion aus der Funktionsmatrix in Figur 2 in einem Ausgangszustand,
Figur 4 eine Funktion aus der Funktionsmatrix aus Figur 2, die einen bekannten Zusammenhang zwischen einem Werkstückparameter und einem Pressenbetriebswert angibt,
Figur 5 eine beispielhafte Darstellung des Zusammenhangs zwischen einzelnen Pressenbetriebswerten und einem Werkstückparameter zur Ermittlung der betreffenden Funktionen der Funktionsmatrix und
Figur 6 ein Flussdiagramm zur Veranschaulichung der Verwendung einer bekannten Funktion zwischen einem Werkstückparameter und einem Pressenbetriebswert, um den Werkstückparameter einzustellen.

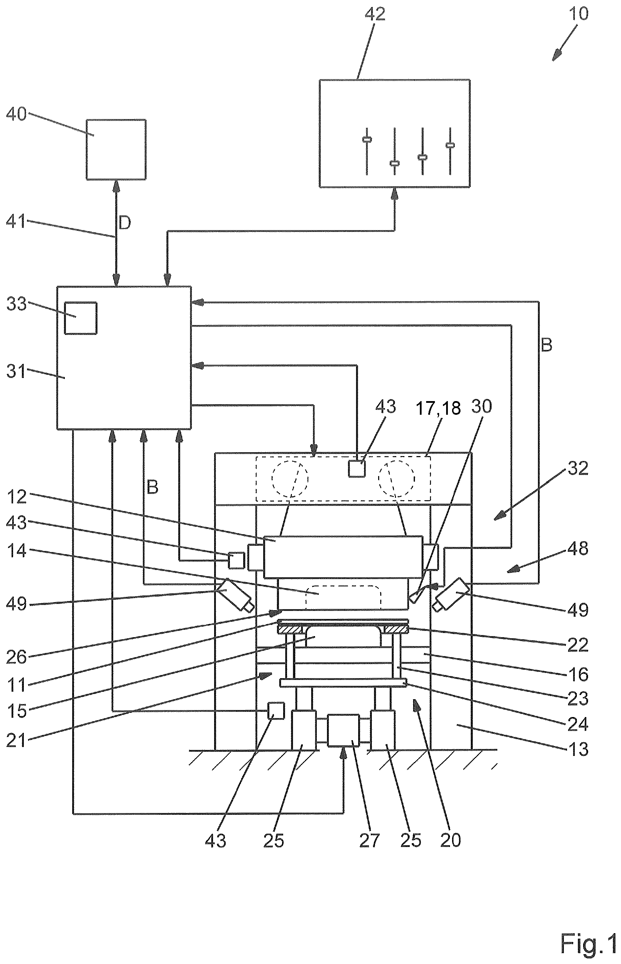

In Figur 1 ist ein Ausführungsbeispiel einer Presse 10 zum Umformen eines Werkstücks 11 dargestellt. Die Presse weist einen in einer Hubrichtung linear bewegbaren Stößel 12 auf, der mittels einer an einem Pressengestell 13 der Presse 10 angeordneten Führungseinrichtung geführt bewegbar gelagert ist. An dem Stößel 12 ist ein Oberwerkzeug 14 angeordnet, das mit einem Unterwerkzeug 15 beim Umformen des Werkstücks 11 zusammenarbeitet. Das Unterwerkzeug 15 kann beispielsweise an einem Pressentisch 16 angeordnet sein, der sich am Pressengestell 13 abstützt.

Zur Relativbewegung des Oberwerkzeugs 14 relativ zum Unterwerkzeug 15 weist die Presse 10 eine Antriebseinrichtung 17 auf. Die Antriebseinrichtung 17 ist beim Ausführungsbeispiel durch den Pressenantrieb 18 gebildet, der mit dem Stößel 12 bewegungsverbunden ist und zur Bewegung des Stößels 12 in Hubrichtung eingerichtet ist. Der Pressenantrieb 18 kann zum Beispiel als Exzenterantrieb und/oder Kniehebelantrieb und/oder Gelenkantrieb mit einem oder mehreren Motoren, vorzugsweise Servomotoren, ausgebildet sein.

Bei dem hier veranschaulichten Ausführungsbeispiel weist die Presse 10 außerdem eine Zieheinrichtung 20 auf. Die Zieheinrichtung 20 hat eine Blechhalteeinrichtung 21 mit einem Blechhaltering 22, auf dessen Oberseite ein umzuformendes Werkstück 11 oberhalb des Unterwerkzeugs 15 abgelegt werden kann. Der Blechhaltering 22 stützt sich über Druckbolzen 23 an einer Schwebeplatte 24 ab. Die Schwebeplatte 24 ist in Hubrichtung des Stößels 12 an einem oder mehreren Hubzylindern 25 angeordnet. Mittels der Hubzylinder 25 kann die Blechhalteeinrichtung 21, die die Schwebeplatte 24, die Druckbolzen 23 und den Blechhaltering 22 aufweist, in Hubrichtung bewegt werden, insbesondere um eine Ziehkraft F oder einen Ziehkraftverlauf während des Tiefziehens des Werkstücks 11 einzustellen. Die Ziehkraft ist die Kraft, mit der das Werkstück 11 während des Tiefziehens zwischen dem Blechhaltering 22 und einer Blechhaltefläche 26 des Oberwerkzeugs 14 eingeklemmt wird.

Die Zieheinrichtung 20 kann als hydraulische oder elektrohydraulische Zieheinrichtung ausgeführt sein. Zur Einstellung der Ziehkraft F bzw. des Ziehkraftverlaufs weist die Zieheinrichtung 20 beispielsgemäß eine Hydraulikeinheit 27 auf, mittels der Hydraulikmedium in die Arbeitskammern der Hubzylinder 25 zugeführt bzw. abgeführt werden kann.

Die Anzahl der Druckbolzen 23 und die Anzahl der Hubzylinder 25 können variieren. Durch Erhöhen der Zahl der Hubzylinder 25 bzw. der Druckbolzen 23 können an unterschiedlichen Stellen des umzuformenden Werkstücks 11 bzw. des Werkzeugs 14, 15 unterschiedliche Ziehkräfte eingestellt werden.

In Abwandlung zu dem veranschaulichten Ausführungsbeispiel kann am Unterwerkzeug 15 bzw. am Pressentisch 16 eine feststehende Blechhaltefläche bereitgestellt werden und ein zur Einstellung der Ziehkraft dienender Blechhaltering am Stößel 12 oder an einem separaten, unabhängig vom Stößel 12 bewegbaren Blechhaltestößel, angeordnet sein.

Bei dem in Figur 1 dargestellten Ausführungsbeispiel wird während des Tiefziehens der Stößel 12 mit dem Oberwerkzeug 14 mittels des Pressenantriebs 18 in Richtung zum Unterwerkzeug 15 hin bewegt. Es ist in Abwandlung hierzu auch möglich, das Unterwerkzeug 15 zum Tiefziehen mittels eines Ziehantriebs in Richtung zum Oberwerkzeug 14 hin zu bewegen.

In Figur 1 ist außerdem stark schematisiert eine Schmiereinrichtung 30 veranschaulicht, mittels der ein Schmiermittel auf die Oberfläche des umzuformenden Werkstücks 11 aufgebracht werden kann. Durch Schmierung der Oberfläche des Werkstücks 11 verändern sich die Gleitreibungseigenschaften zwischen der Blechhaltefläche 26 und der Oberfläche des Werkstücks 11. Dies beeinflusst das Halten und Klemmen des Werkstücks 11 während des Tiefziehens zwischen dem Blechhaltering 22 und der Blechhaltefläche 26.

Sämtliche Antriebe und/Aktuatoren der Presse 10, die beim Umformen oder dem Transport des Werkstücks 11 einsetzbar sind, sowie Einrichtungen und Mittel der Presse 10, die einen Werkstückparameter bzw. das Umformergebnis des Werkstücks 11 beeinflussen können, bilden eine von einer Steuereinrichtung 31 ansteuerbare Arbeitseinheit 32 der Presse 10. Zu der Arbeitseinheit 32 gehören beispielsgemäß der Pressenantrieb 18, die Zieheinrichtung 20 und die Schmiereinrichtung 30. Abhängig von der Ausführung der Presse 10 können hier weitere von der Steuereinrichtung 31 ansteuerbare Einrichtungen der Presse 10 hinzukommen oder entfallen. Beispielsweise kann zu der Arbeitseinheit 32 der Presse 10 eine Transfereinrichtung hinzukommen, die für den Werkstücktransfer des umzuformenden Werkstücks 11 und/oder für den Werkstücktransfer des umgeformten Werkstücks eingerichtet ist. Im einfachsten Fall kann die Arbeitseinheit 32 durch den Pressenantrieb 18 gebildet sein.

Um die verschiedenen Antriebe bzw. ansteuerbaren Einrichtungen der Arbeitseinheit 32 zu koordinieren bzw. zu steuern, gibt die Steuereinrichtung 31 Pressenbetriebswerte A1 bis An aus. Die Pressenbetriebswerte A1 bis An definieren den Ablauf eines Pressenzyklus und können beispielsweise einen oder mehrere der folgenden Eigenschaften definieren:
- eine Position des Stößels 12 in Hubrichtung,
- eine Bewegungsgeschwindigkeit des Stößels 12 in Hubrichtung,
- eine Beschleunigung des Stößels 12 in Hubrichtung,
- eine Ziehkraft F oder einen zeitabhängigen oder wegabhängigen Ziehkraftverlauf während des Umformens eines Werkstücks 11,
- unterschiedliche Ziehkräfte und/oder unterschiedliche Ziehkraftverläufe an verschiedenen Stellen des Werkstücks 11,
- eine Menge eines auf die Oberfläche des umzuformenden Werkstücks 11 aufgebrachten Schmiermittels,
- eine Position und/oder Geschwindigkeit und/oder Beschleunigung einer Transfereinrichtung zum Zuführen eines zu bearbeitenden Werkstücks 11 und/oder zum Abtransportieren eines umgeformten Werkstücks 11.

Welche Pressenbetriebswerte A1 bis An durch die Steuereinrichtung 31 einstellbar sind, hängt von der konkreten Ausführung der Presse 10 ab und kann variieren. Insoweit ist die oben beschriebene Liste lediglich beispielhaft und nicht abschließend.

Mittels dieser Pressenbetriebswerte A1 bis An kann das Umformergebnis des Werkstücks 11 verändert werden, um Vorgaben an Toleranzen einzelner Dimensionen und die Qualität des umgeformten Werkstücks 11 zu erreichen. Das Werkstück 11 selbst ist durch Werkstückparameter P1 bis Pm definiert. Die Werkstückparameter P1 bis Pm charakterisieren das umgeformte Werkstück 11 und können zumindest zum Teil auch das noch nicht umgeformte Werkstück 11 charakterisieren. Als Werkstückparameter P1 bis Pm können eine oder mehrere der folgenden Parameter verwendet werden:
- ein Material und/oder eine Beschichtung des umzuformenden Werkstücks 11,
- wenigstens eine Dimension des umzuformenden Werkstücks 11, wie beispielsweise die Dicke eines umzuformenden Blechs, die Länge und/oder die Breite und/oder der Durchmesser eines umzuformenden Blechs,
- wenigstens eine Dimension des umgeformten Werkstücks 11, wie beispielsweise ein Einzug E, der die Breite eines flachen Randes an einem umgeformten Werkstück 11 beschreibt oder die Dicke des Materials des umgeformten Werkstücks 11 an einer oder an mehreren Stellen,
- das Vorhandensein oder die Abwesenheit von Wellen oder Falten in einem Flächenabschnitt des umgeformten Werkstücks 11,
- das Vorhandensein oder die Abwesenheit wenigstens eines Risses in einem Flächenabschnitt des umgeformten Werkstücks 11,
- die Rauheit der Oberfläche eines Flächenabschnitts des umgeformten Werkstücks 11.

Die Liste der oben beschriebenen Werkstückparameter P1 bis Pm ist beispielhaft und nicht abschließend.

In einem Speicher 33 der Steuereinrichtung 31 sind sämtliche relevanten, zum Einstellen der Presse 10 veränderbaren Pressenkennwerte A1 bis An definiert, die zur Ansteuerung der Arbeitseinheit 32 verwendet und ausgegeben werden können. In dem Speicher 33 sind außerdem mehrere und insbesondere alle relevanten Werkstückparameter P1 bis Pm definiert. Sowohl die Anzahl, als auch die Werte der im Speicher 33 abgespeicherten Pressenbetriebswerte A1 bis An und Werkstückparameter P1 bis Pm, sind veränderbar.

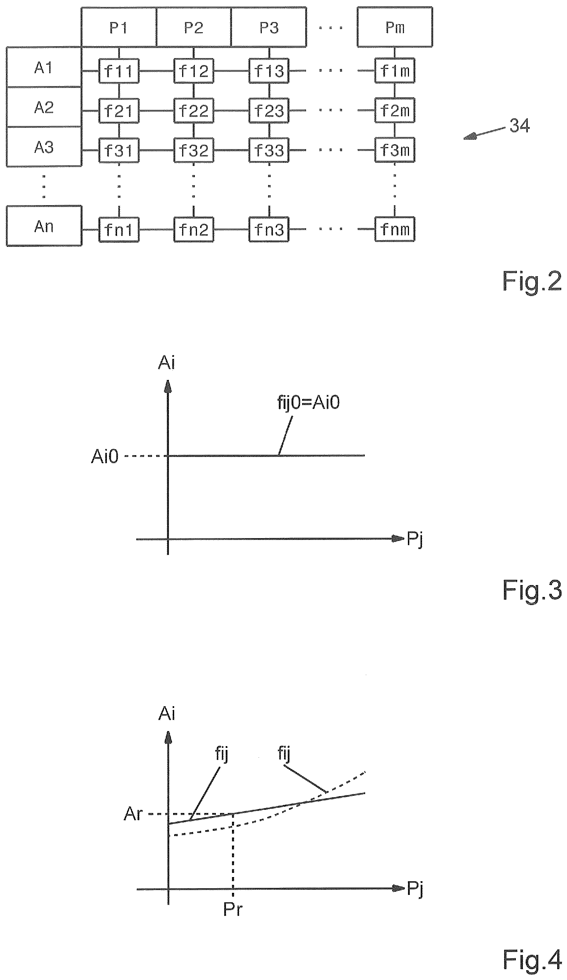

Sämtliche Pressenbetriebswerte A1 bis An sind jeweils mit allen definierten Werkstückparameter P1 bis Pm über eine Verknüpfungsmatrix 34 (Figur 2) verknüpft. Jedes Matrixelement bzw. jeder Knoten in dieser Verknüpfungsmatrix 34 ist durch eine individuell veränderbare Funktion f11 bis fnm gebildet. Über diese Verknüpfungsmatrix 34 kann durch Anpassen jeder der individuell veränderbaren Funktionen f11 bis fnm der Zusammenhang zwischen jedem definierten Werkstückparameter P1 bis Pm und jedem Pressenbetriebswert A1 bis An definiert werden. Diese Verknüpfungsmatrix 34 ist im Speicher 33 der Steuereinrichtung 31 hinterlegt, so dass sich sehr viele Einstellmöglichkeiten ergeben, um die Presse 10 an eine Umformaufgabe anzupassen. Die Presse 10 ist mithin sehr flexibel an unterschiedliche Umformaufgaben anpassbar.

In einem Ausgangszustand fij0 definiert eine individuell veränderbare Funktion fij die Unabhängigkeit zwischen dem zugeordneten Werkstückparameter pj sowie dem zugeordneten Pressenbetriebswert Ai, wie es schematisch in Figur 3 veranschaulicht ist. Die Funktion fij gibt in ihrem Ausgangszustand fij0 einen konstanten Wert Ai0 für den Pressenbetriebswert Ai aus, unabhängig vom Betrag des zugeordneten Werkstückparameters Pj.

Diesen Ausgangszustand fij0 nimmt jede individuell anpassbare Funktion fij ein, solange nicht ein Zusammenhang zwischen dem zugeordneten Werkstückparameter Pj und dem zugeordneten Pressenbetriebswert Ai bekannt ist oder durch eine Bedienperson anders eingestellt wird. Hier sind i, j jeweils natürliche Zahlen größer als null.

In Figur 4 sind beispielhaft Verläufe für eine individuell anpassbare Funktion fij dargestellt, bei der eine Abhängigkeit zwischen dem Pressenbetriebswert Ai und dem Werkstückparameter Pj besteht. Vorzugsweise wird der Zusammenhang zwischen einem Werkstückparameter Pj und einem Pressenbetriebswert Ai durch einen linearen oder zumindest abschnittsweise linearen Zusammenhang definiert, wie es durch die durchgezogene Linie in Figur 4 veranschaulicht ist. Es ist aber auch möglich, andere nicht lineare Funktionsverläufe einzustellen, wie es durch die gestrichelte Linie in Figur 4 schematisch veranschaulicht ist. Zur Veränderung einer Funktion fij können beispielsweise mehrere bekannte Punkte vorgegeben und andere Werte durch Interpolation und/oder Extrapolation ermittelt werden.

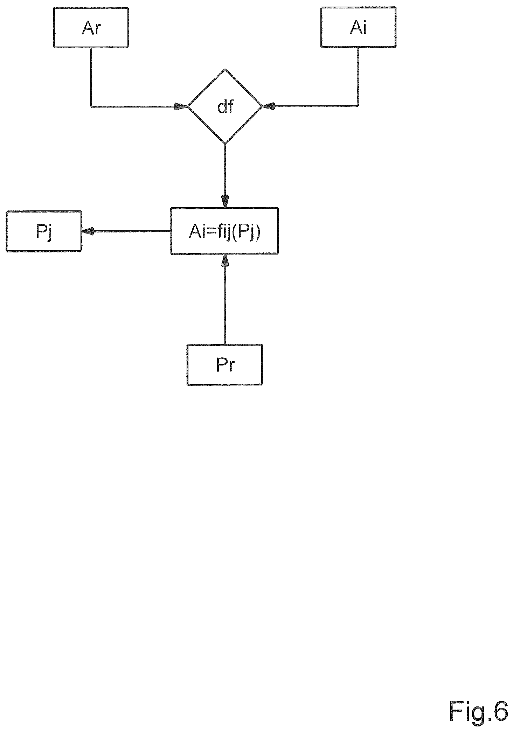

In Figur 6 ist der in Figur 4 veranschaulichte, beispielhaft lineare Zusammenhang nochmals in Form eines Blockschaltbildes veranschaulicht. Es sei angenommen, dass die Koordinaten eines Referenzpunktes Pr/Ar, sowie die Steigung df der Funktion fij bekannt ist. Anhand dieser Informationen kann durch Veränderung des betreffenden Pressenbetriebswertes Ai der Werkstückparameter Pj wunschgemäß angepasst werden.

Wenigstens eine oder mehrere der individuell veränderbaren Funktionen fij wird aus dem jeweiligen Ausgangszustand heraus verändert, um die Abhängigkeit zwischen dem betreffenden Werkstückparameter Pj und dem zugeordneten Pressenbetriebswert Ai in der Steuereinrichtung 31 vorzugeben. Hierfür können beispielsweise Eingangsdaten D von einer externen Datenquelle 40 über eine Kommunikationsverbindung 41 an die Steuereinrichtung 31 übermittelt werden. Die Eingangsdaten D können bereits bekannte Zusammenhänge zwischen einem oder mehreren der Werkstückparameter P1 bis Pm und einer oder mehreren der Pressenbetriebswerte A1 bis An definieren. Solche Eingangsdaten D können beispielsweise von bereits betriebenen Pressen 10 stammen, die dieselbe oder ähnliche Umformaufgaben ausführen und/oder in ähnlichen Arbeitsbedingungen betrieben werden und/oder vom selben Pressentyp sind. Über die Kommunikationsverbindung 41 ist es auch möglich, die beim Betrieb der Presse 10 gewonnenen Erkenntnisse und darauf basierenden Einstellungen der Funktionen f11 bis fnm nach extern zu übertragen und beispielsweise anderen Pressen zur Verfügung zu stellen.

Wie es in Figur 1 veranschaulicht ist, weist die Presse 10 auch eine Bedienschnittstelle 42 auf, über die eine Bedienperson einzelne Funktionen fij modifizieren kann, für die eine Abhängigkeit zwischen einem Pressenbetriebswert Ai und einem Werkstückparameter Pj bekannt ist. Diese Abhängigkeit ist dann gegeben, wenn die betreffende Funktion fij zumindest abschnittsweise eine Steigung ungleich Null aufweist (Figur 4). Zur Erzielung bestimmter Werkstückparameter Pj kann eine Bedienperson Sollwerte für die betreffenden Pj vorgeben, so dass die Presse die zugehörigen Pressenbetriebswerte A1 bis An automatisch entsprechend der Verknüpfungsmatrix 34 einstellt.

Die Steuereinrichtung 31 kann über die Bedienschnittstelle 42 auch Informationen an den Benutzer ausgeben.

Wie es ebenfalls in Figur 1 veranschaulicht ist, weist die Presse 10 mehrere Sensoren 43 auf, um einen oder mehrere Pressenbetriebswerte Ai zu ermitteln und an die Steuereinrichtung 31 zu übertragen, so dass eine Regelung des betreffenden Pressenbetriebswerts Ai möglich ist. Beispielsweise kann durch den wenigstens einen Sensor 43 eine Drehzahl und/oder ein Drehmoment eines Motors des Pressenantriebs 18 und/oder eine aktuelle Position des Stößels 12 in Hubrichtung H und/oder ein die Ziehkraft F beschreibender Sensorwert, beispielsweise ein hydraulischer Druck in einem Hubzylinder 25, erfasst werden. Die Anzahl der Sensoren 43 und die jeweils erfasste physikalische Größe können abhängig von der Ausgestaltung der Presse 10 variieren.

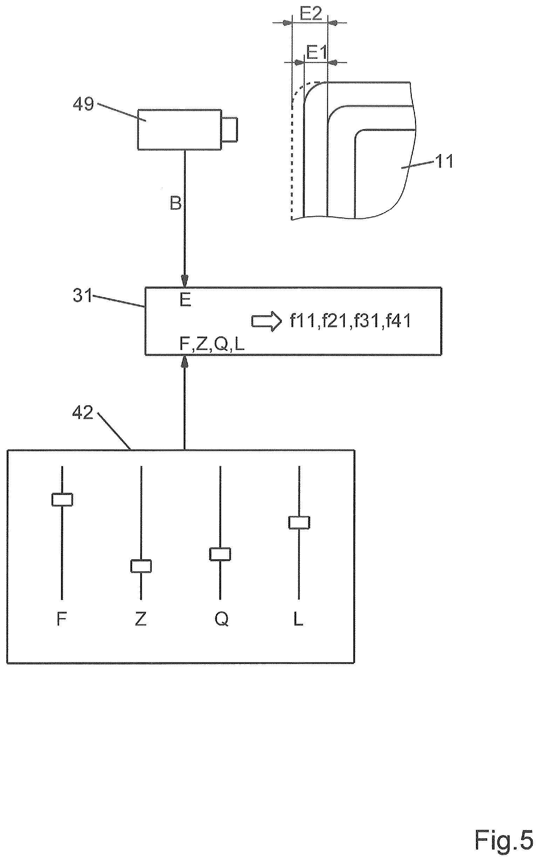

Die Presse 10 weist bei dem dargestellten bevorzugten Ausführungsbeispiel außerdem eine Erfassungseinrichtung 48 auf, mittels der ein Erfassungssignal B erfasst und an die Steuereinrichtung 31 übertragen werden kann. Beim dargestellten Ausführungsbeispiel weist die Erfassungseinrichtung 48 wenigstens eine oder vorzugsweise mehrere optische Sensoren und beispielsgemäß Kameras 49 auf. Das von einer Kamera 49 bereitgestellte Erfassungssignal ist ein Bild B eines Flächenabschnitts eines umgeformten Werkstücks 11. Beispielsgemäß wird das Bild B aufgenommen, solange sich das umgeformte Werkstück 11 noch im Bereich zwischen dem Unterwerkzeug 15 und dem Oberwerkzeug 14 befindet und noch nicht aus dem Werkzeug entfernt wurde. Das Bild B kann auch aufgenommen werden, während das umgeformte Werkstück 11 bewegt wird, beispielsweise während des Transfers mittels einer Transfereinrichtung der Presse. Anhand des Erfassungssignals B und beispielsgemäß der Bilder der Kameras 49, können ein oder mehrere Werkstückparameter P1 bis Pm des umgeformten Werkstücks 11 in der Steuereinrichtung 31 ermittelt werden. Beispielsweise kann anhand der Bilder geprüft werden, ob sich in einem Bereich des umgeformten Werkstücks 11 Risse, Falten oder Wellen gebildet haben oder ob Riefen in der Oberfläche vorhanden sind. Außerdem kann anhand von Bildverarbeitungsverfahren eine oder mehrere Abmessungen am umgeformten Werkstück 11 ermittelt werden, beispielsweise ein Einzug E (Figur 5).

In Figur 5 ist beispielhaft, ein Werkstückparameter, beispielsgemäß der Einzugs E, und dessen Abhängigkeit von mehreren Pressenbetriebswerten veranschaulicht, beispielsgemäß:
- einer Ziehkraft F,
- einer stößelpositionsabhängige Ziehkraftprogression Z,
- ein Ziehkraftquerabgleich Q, der eine Veränderung der Ziehkraft F an unterschiedlichen Stellen des Werkzeugs 14, 15 in einer Ebene quer zur Hubrichtung beschreibt,
- eine Schmiermittelmenge L, die durch die Schmiereinrichtung 30 auf die Werkstückoberfläche aufgebracht wird.

Eine Bedienperson kann beispielsweise einen dieser Pressenbetriebswerte verändern, wodurch sich wiederum der Einzug E von einem ersten Einzugswert E1 auf einen zweiten Einzugswert E2 verändert. Diese Veränderung kann manuell oder beispielsgemäß automatisch unter Verwendung der Erfassungseinrichtung 48 mit der wenigstens einen Kamera 49 erfasst werden. Daraus kann dann die Abhängigkeit zwischen dem geänderten Pressenbetriebswert und dem Einzug E ermittelt werden. Dies kann separat für sämtliche Pressenbetriebswerte ausgeführt werden, um die jeweilige Abhängigkeit und dem jeweiligen Einfluss eines Pressenbetriebswertes auf den Einzug E anhand der entsprechenden Funktionen zu ermitteln, wenn der Zusammenhang noch unbekannt ist.

Sind umgekehrt die Abhängigkeiten durch die Funktionen bereits bekannt, kann die Bedienperson über die Bedienschnittstelle 42 einen gewünschten Einzug E durch Anpassen von einem oder mehreren der Pressenbetriebswerte vorgeben, von denen der Einzug E abhängt.

Es ist auch möglich, einen oder mehrere der Pressenbetriebswerte automatisch anzupassen, wenn sich ein Werkstückparameter zunehmend verändert und sich einer Toleranzgrenze annähert. Dies kann beispielsweise auftreten, aufgrund von Temperaturveränderungen oder Verschleiß das Umformen des Werkstücks 11 beeinflusst wird.

Die Steuereinrichtung 31 verwendet jeweils sämtliche Funktionen f11 bis fnm zur Ermittlung der Pressenbetriebswerte A1 bis An. Dabei wirken sich nur solche Funktionen fij aus, die zumindest abschnittsweise eine Steigung ungleich Null haben und somit eine Veränderung des betreffenden Pressenbetriebswertes Ai bei einer entsprechenden Veränderung des zugeordneten Werkstückparameters Pj bewirken. Diejenigen Funktionen fij, für die ein Zusammenhang zwischen dem zugeordneten Pressenbetriebswert Ai und dem zugeordneten Werkstückparameter Pj nicht bekannt ist oder für den bekannt ist, dass ein Zusammenhang nicht besteht, verändern den zugehörigen Pressenbetriebswert Ai nicht, selbst wenn sich der zugeordnete Werkstückparameter Pj verändert, so dass die betreffende Funktion fij ihren Ausgangszustand fij0 einnimmt (Figur 3).

Mittels dieser Verknüpfungsmatrix 34 ist die Presse 10 flexibel an unterschiedliche Umformaufgaben anpassbar. Auf Veränderungen durch äußere Einflüsse, wie Verschleiß, Temperatur, usw. lassen sich durch eine einfache Einstellung einer oder mehrerer der Funktionen fij kompensieren. Wenn A-Priori-Wissen für Zusammenhänge von einzelnen Werkstückparametern mit einzelnen Pressenbetriebswerten zur Verfügung steht, kann dieses A-Priori-Wissen vor Inbetriebnahme der Presse 10 in dem Speicher 33 der Steuereinrichtung 31 abgespeichert werden, was das Einstellen der Presse 10 auf eine Umformaufgabe stark vereinfacht. Diese einfache Anpassung ist aufgrund der Verknüpfungsmatrix 34 möglich. Eine Bedienperson kann über die Bedienschnittstelle 42 die erforderlichen anwendungsabhängigen und/oder umgebungsabhängigen Anpassungen einfach und schnell vornehmen. Abhängig von der Verfügbarkeit des A-priori-Wissens kann eine Einstellphase zum Einstellen einer Presse 10 erheblich verkürzt werden, was insbesondere den Materialverbrauch und die damit zusammenhängenden Kosten senkt.

Die Erfindung betrifft eine Presse 10 und ein Verfahren zu deren Betrieb. Die Presse 10 hat zum Umformen eines Werkstücks 11 ein Oberwerkzeug 14 und ein Unterwerkzeug 15. Eine Arbeitseinheit 32 der Presse 10, zu der beispielsweise ein Pressenantrieb 18 und/oder eine Zieheinrichtung 20 gehören, ist durch eine Steuereinrichtung 31 ansteuerbar, um den Umformvorgang auszuführen. Dabei gibt die Steuereinrichtung 31 Pressenbetriebswerte A1 bis An an die Arbeitseinheit 32 aus, die den Ablauf des Umformvorgangs definieren. Werkstückparameter P1 bis Pm charakterisieren das noch umzuformende bzw. das bereits umgeformte Werkstück 11, beispielsweise im Hinblick auf das Material und/oder die Form und/oder wenigstens eine Dimension und/oder die Qualität. Der Steuereinrichtung 31 ist eine Verknüpfungsmatrix 34 vorgegeben, in der für jeden definierten Werkstückparameter P1 bis Pm und für jeden definierten Pressenbetriebswert A1 bis An jeweils eine individuell veränderbare Funktion f11 bis fnm vorhanden ist, um den Zusammenhang zwischen jedem der definierten Werkstückparameter P1 bis Pm und jedem der definierten Pressenbetriebswerte A1 bis An beschreiben zu können. Mittels dieser Verknüpfungsmatrix 34 ist eine schnelle und rasche Einstellung und Anpassung der Presse 10 möglich.

### Bezugszeichenliste:

- 10: Presse
- 11: Werkstück
- 12: Stößel
- 13: Pressengestell
- 14: Oberwerkzeug
- 15: Unterwerkzeug
- 16: Pressentisch
- 17: Antriebseinrichtung
- 18: Pressenantrieb

- 20: Zieheinrichtung
- 21: Blechhalteeinrichtung
- 22: Blechhaltering
- 23: Druckbolzen
- 24: Schwebeplatte
- 25: Hubzylinder
- 26: Blechhaltefläche
- 27: Hydraulikeinheit

- 30: Schmiereinrichtung
- 31: Steuereinrichtung
- 32: Arbeitseinheit
- 33: Speicher
- 34: Verknüpfungsmatrix

- 40: externen Datenquelle
- 41: Kommunikationsverbindung
- 42: Bedienschnittstelle
- 43: Sensoren
- 48: Erfassungseinrichtung
- 49: Kamera

- A1 bis An: Pressenbetriebswert
- B: Erfassungssignal
- D: Eingangsdaten
- df: Steigung
- E: Einzug
- E1: erster Einzugswert
- E2: zweiter Einzugswert
- f11 bis fnm: individuell veränderbare Funktion
- F: Ziehkraft
- L: Schmiermittelmenge
- P1 bis Pm: Werkstückparameter
- Q: Ziehkraftquerabgleich
- Z: Ziehkraftprogression

## Patentansprüche

1. Presse (10) zum Umformen von Werkstücken (11), wobei mehrere Werkstückparameter (P1 bis Pm) das umzuformende und/oder umgeformte Werkstück (11) charakterisiert,
mit einem Oberwerkzeug (14) und einem Unterwerkzeug (15), die zum Umformen eines Werkstücks (11) zusammenarbeiten,
mit einer von einer Steuereinrichtung (31) ansteuerbaren Arbeitseinheit (32), die dazu eingerichtet ist, den Umformvorgang des Werkstücks (11) basierend auf Pressenbetriebswerten (A1 bis An) auszuführen,
mit einer Steuereinrichtung (31), die zur Vorgabe der Pressenbetriebswerte (A1 bis An) für die Arbeitseinheit (32) eingerichtet ist, **dadurch gekennzeichnet, dass** in der Steuereinrichtung (31) eine Verknüpfungsmatrix (34) abgespeichert ist, die für jeden der Pressenbetriebswerte (A1 bis An) jeweils eine individuell veränderbare Funktion (fij) für jeden der Werkstückparameter (P1 bis Pm) enthält, die den Zusammenhang zwischen dem jeweiligen Pressenbetriebswert (Ai) und dem jeweils zugeordneten Werkstückparameter (Pj) der mehreren Werkstückparameters (P1 bis Pm) beschreibt,
und wobei die Steuereinrichtung (31) dazu eingerichtet ist, alle vorhandenen Funktionen (f11 bis fnm) für die Bestimmung der Pressenbetriebswerte (P1 bis Pn) zu verwenden und an die Arbeitseinheit (32) auszugeben.

2. Presse nach Anspruch 1,
**dadurch gekennzeichnet, dass** jede individuell veränderbare Funktion (f11 bis fnm) in einem Ausgangszustand eine Unabhängigkeit zwischen dem jeweiligen Pressenbetriebswert (Ai) und dem jeweiligen Werkstückparameter (Pj) definiert.

3. Presse nach Anspruch 1 oder 2,
**dadurch gekennzeichnet, dass** die Steuereinrichtung (31) zum Empfang von Eingangsdaten (D) eingerichtet ist, die den tatsächlichen Zusammenhang zwischen einem der Pressenbetriebswerte (Ai) und einem der Werkstückparameter (Pj) charakterisieren und dass die Steuereinrichtung (31) dazu eingerichtet ist, die zugeordnete Funktion (fij) an den tatsächlichen Zusammenhang anzupassen.

4. Presse nach Anspruch 3,
**dadurch gekennzeichnet, dass** eine Bedienschnittstelle (42) vorhanden ist, die zur Eingabe von Eingangsdaten (D) durch eine Bedienperson eingerichtet ist.

5. Presse nach Anspruch 3 oder 4,
**dadurch gekennzeichnet, dass** die Steuereinrichtung (31) über eine Kommunikationsverbindung (41) mit einer externen Datenquelle (40) verbunden ist, so dass Eingangsdaten (D) von der externen Datenquelle (40) empfangen werden können.

6. Presse nach einem der vorhergehenden Ansprüche,
**dadurch gekennzeichnet, dass** eine Erfassungseinrichtung (48) vorhanden ist, die dazu eingerichtet ist, ein einen oder mehrere der Werkstückparameter (P1 bis Pm) beschreibendes Erfassungssignal (B) zu erzeugen und zur Ermittlung des wenigstens eines Werkstückparameters (P1 bis Pm) an die Steuereinrichtung (31) weiterzuleiten.

7. Presse nach einem der vorhergehenden Ansprüche,
**dadurch gekennzeichnet, dass** die Arbeitseinheit (32) eine Zieheinrichtung (20) zur Einstellung eines Ziehkraftwertes (F) und/oder eines Ziehkraftverlaufs (F, Z) aufweist, wobei der Ziehkraftwert (F) und/oder der Ziehkraftverlauf (F, Z) durch jeweils einen oder mehrere Pressenbetriebswerte (Ai) gekennzeichnet sind.

8. Presse nach Anspruch 7,
**dadurch gekennzeichnet, dass** die Zieheinrichtung (20) zur Einstellung unterschiedlicher Ziehkraftwerte (F, Q) und/oder Ziehkraftverläufe (F, Z, Q) an unterschiedlichen Stellen des Oberwerkzeugs (14) und des Unterwerkzeugs (15) eingerichtet ist, wobei die Ziehkraftwerte (F, Q) und/oder die Ziehkraftverläufe (F, Z, Q) durch jeweils einen oder mehrere Pressenbetriebswerte (Ai) gekennzeichnet sind.

9. Presse nach einem der vorhergehenden Ansprüche,
**dadurch gekennzeichnet, dass** die Arbeitseinheit (32) eine Schmiereinrichtung (30) aufweist, die zum Aufbringen eines Schmiermittels auf das Werkstück (11) vor dem Umformen eingerichtet ist, wobei die Schmiermittelmenge (L) des auf das Werkstück (11) aufgebrachten Schmiermittels durch einen oder mehrere Pressenbetriebswerte (Ai) gekennzeichnet ist.

10. Presse nach einem der vorhergehenden Ansprüche,
**dadurch gekennzeichnet, dass** die ansteuerbare Arbeitseinheit (32) eine Antriebseinrichtung (18) aufweist, die dazu eingerichtet ist, das Oberwerkzeug (14) und das Unterwerkzeug (15) relativ zueinander zu bewegen, und dass die Antriebseinrichtung (18) zur Einstellung der Position und/oder einer zeitlichen Ableitung der Position des Oberwerkzeugs (14) und/oder des Unterwerkzeugs (15) eingerichtet ist, wobei die Position und/oder eine zeitlichen Ableitung der Position durch jeweils einen oder mehrere Pressenbetriebswerte (Ai) gekennzeichnet sind.

11. Presse nach einem der vorhergehenden Ansprüche,
**dadurch gekennzeichnet, dass** zumindest einer der Werkstückparameter (P1 bis Pm) eine Dimension des umgeformten Werkstücks (11) beschreibt.

12. Presse nach einem der vorhergehenden Ansprüche,
**dadurch gekennzeichnet, dass** zumindest einer der Werkstückparameter (P1 bis Pm) angibt, ob in einem Flächenabschnitt des umgeformten Werkstücks (11) Wellen oder Falten vorhanden sind.

13. Presse nach einem der vorhergehenden Ansprüche,
**dadurch gekennzeichnet, dass** zumindest einer der Werkstückparameter (P1 bis Pm) angibt, ob in einem Flächenabschnitt des umgeformten Werkstücks (11) wenigstens ein Riss vorhanden ist.

14. Verfahren zum Betreiben einer Presse (10) mit einem Oberwerkzeug (14) und einem Unterwerkzeug (15), die zum Umformen eines Werkstücks (11) zusammenarbeiten, wobei mehrere Werkstückparameter (P1 bis Pm) das umzuformende und/oder umgeformte Werkstück (11) charakterisieren, und mit einer von einer Steuereinrichtung (31) ansteuerbaren Arbeitseinheit (32), die den Umformvorgang des Werkstücks (11) basierend auf Pressenbetriebswerten (A1 bis An) ausführt, **dadurch gekennzeichnet, dass** in der Steuereinrichtung (31) eine Verknüpfungsmatrix (34) abgespeichert ist, die für jeden der Pressenbetriebswerte (A1 bis An) jeweils eine individuell veränderbare Funktion (fij) für jeden der Werkstückparameter (P1 bis Pm) enthält, die den Zusammenhang zwischen dem jeweiligen Pressenbetriebswert (Ai) und jeweils einem Werkstückparameter (Pj) des wenigstens einen Werkstückparameters (P1 bis Pm) beschreibt,
wobei die Pressenbetriebswerte (A1 bis An) basierend auf allen Funktionen (f11 bis fnm) ermittelt und an die Arbeitseinheit (32) ausgegeben werden, die den Umformvorgang basierend auf den jeweils aktuellen Pressenbetriebswerten (A1 bis An) durchführt.

## Claims

1. A press (10) for shaping workpieces (11),
wherein multiple workpiece parameters (P1 through Pm) characterize the workpiece (11) that is to be shaped and/or has been shaped,
with an upper tool (14) and a lower tool (15), which cooperate to shape a workpiece (11),
with a work unit (32) that is controllable by a controller (31) and that is configured to perform the shaping process of the workpiece (11) based on press process values (A1 through An),
with a controller (31) that is configured to specify the press process values (A1 through An) for the work unit (32), **characterized in that** in the controller (31) a composition matrix (34) is stored, which contains, for each of the press process values (A1 through An), an individually changeable function (fij) for each of the workpiece parameters (P1 through Pm) respectively, which describes the relationship between the respective press process value (Ai) and the respectively assigned workpiece parameter (Pj) of the multiple workpiece parameters (P1 through Pm),
and the controller (31) being configured to use all available functions (f11 through fnm) for determination of the press process values (P1 through Pn) and to output them to the work unit (32).

2. A press according to claim 1,
**characterized in that** in an initial state every individually changeable function (f11 to fnm) defines an independence between the respective press process value (Ai) and the respective workpiece parameter (Pj).

3. A press according to claim 1 or 2,
**characterized in that** the controller (31) is configured to receive input data (D), which characterize the actual relationship between one of the press process values (Ai) and one of the workpiece parameters (Pj), and that the controller (31) is configured to adapt the associated function (fij) to the actual relationship.

4. A press according to claim 3,
**characterized in that** an operator interface (42) is present, which is configured for input of input data (D) by an operator.

5. A press according to claim 3 or 4,
**characterized in that** the controller (31) is connected with an external data source (40) via a communications link (41), so that input data (D) can be received from the external data source (40).

6. A press according to any one of the preceding claims, **characterized in that** a detection device (48) is present that is configured to create a detection signal (B) describing one or more of the workpiece parameters (P1 through Pm) and forward it to the controller (31) for determination of the at least one workpiece parameter (P1 through Pm).

7. A press according to any one of the preceding claims, **characterized in that** the work unit (32) has a drawing device (20) for adjustment of a drawing force value (F) and/or of a drawing force progress (F, Z), the drawing force value (F) and/or the drawing force progress (F, Z) being **characterized by** one or more press process values (Ai) respectively.

8. A press according to claim 7,
**characterized in that** the drawing device (20) is configured for adjustment of different drawing force values (F, Q) and/or drawing force progresses (F, Z, Q) at different locations on the upper tool (14) and the lower tool (15), the drawing force values (F, Q) and/or drawing force progresses (F, Z, Q) being **characterized by** one or more press process values (Ai) respectively.

9. A press according to any one of the preceding claims, **characterized in that** the work unit (32) has a lubrication device (30), which is configured to apply a lubricant onto the workpiece (11) before shaping, the lubricant quantity (L) of the lubricant applied onto the workpiece (11) being **characterized by** one or more press process values (Ai).

10. A press according to any one of the preceding claims, **characterized in that** the controllable work unit (32) has a drive device (18), that is configured to move the upper tool (14) and the lower tool (15) relative to one another, and that the drive device (18) is configured to adjust the position and/or a time derivative of the position of the upper tool (14) and/or of the lower tool (15), the position and/or a time derivative of the position being **characterized by** one or more press process values (Ai) respectively.

11. A press according to any one of the preceding claims, **characterized in that** at least one of the workpiece parameters (P1 through Pm) describes a dimension of the shaped workpiece (11).

12. A press according to any one of the preceding claims, **characterized in that** at least one of the workpiece parameters (P1 through Pm) indicates whether ripples or folds are present in a surface section of the shaped workpiece (11).

13. A press according to any one of the preceding claims, **characterized in that** at least one of the workpiece parameters (P1 through Pm) indicates whether at least one crack is present in a surface section of the shaped workpiece (11).

14. A method for operating a press (10) having an upper tool (14) and a lower tool (15), which cooperate to shape a workpiece (11), wherein multiple workpiece parameters (P1 through Pm) characterize the workpiece (11) that is to be shaped and/or that has been shaped, having a work unit (32) that is controllable by a controller (31) and that performs the shaping process of the workpiece (11) on the basis of press process values (A1 through An), **characterized in that** in the controller (31) a composition matrix (34) is stored, which contains, for each of the press process values (A1 through An), an individually changeable function (fij) for each of the workpiece parameters (P1 through Pm) respectively, which describes the relationship between the respective press process value (Ai) and respectively one of the at least one workpiece parameter (P1 through Pm),
the press process values (A1 through An) being determined on the basis of all functions (f11 through fnm) and output to the work unit (32), which performs the shaping process on the basis of each of the current press process values (A1 through An) .

## Revendications

1. Presse (10) destinée au formage de pièces (11),
dans laquelle plusieurs paramètres de pièce (P1 à Pm) caractérisent la pièce (11) à former et/ou ayant été formée,
comprenant un outil supérieur (14) et un outil inférieur (15) qui coopèrent en vue du formage d'une pièce (11),
comprenant une unité de travail (32) qui peut être activée par un dispositif de commande (31) et est conçue pour exécuter l'opération de formage de la pièce (11), sur la base de valeurs de fonctionnement de presse (A1 à An),
comprenant un dispositif de commande (31) qui est conçu pour prédéfinir les valeurs de fonctionnement de presse (A1 à An) pour l'unité de travail (32), **caractérisée en ce que** dans le dispositif de commande (31), est enregistrée une matrice logique (34) qui contient pour chacune des valeurs de fonctionnement de presse (A1 à An) respectivement une fonction (fij) modifiable individuellement pour chacun des paramètres de pièce (P1 à Pm), qui décrit la relation entre la valeur de fonctionnement de presse (Ai) respective et le paramètre de pièce (Pj) respectif associé de la pluralité de paramètres de pièce (P1 à Pm),
et dans laquelle le dispositif de commande (31) est conçu pour utiliser l'ensemble des fonctions (f11 à fnm) présentes pour la détermination des valeurs de fonctionnement de presse (P1 à Pn) et les transmettre à l'unité de travail (32).

2. Presse selon la revendication 1, **caractérisée en ce que** chaque fonction (f11 à fnm) modifiable individuellement définit, dans un état initial, une absence de lien entre la valeur de fonctionnement de presse (Ai) respective et le paramètre de pièce (Pj) respectif.

3. Presse selon la revendication 1 ou 2, **caractérisée en ce que** le dispositif de commande (31) est conçu pour la réception de données d'entrée (D) qui caractérisent la relation réelle entre l'une des valeurs de fonctionnement de presse (Ai) et l'un des paramètres de pièce (Pj), et **en ce que** le dispositif de commande (31) est conçu pour adapter à la relation réelle, la fonction (fij) associée.

4. Presse selon la revendication 3, **caractérisée en ce qu'**il est prévu une interface utilisateur (42) qui est conçue pour la saisie de données d'entrée (D) par un utilisateur.

5. Presse selon la revendication 3 ou 4, **caractérisée en ce que** le dispositif de commande (31) est relié via une liaison de communication (41) à une source de données (40) externe, de manière à ce que des données d'entrée (D) puissent être reçues depuis la source de données (40) externe.

6. Presse selon une des revendications précédentes, **caractérisée en ce qu'**il est prévu un dispositif de détection (48) qui est conçu pour générer un signal de détection (B), décrivant un ou plusieurs des paramètres de pièce (P1 à Pm), et le transmettre au dispositif de commande (31) afin de déterminer le paramètre de pièce (P1 à Pm), au nombre d'au moins un.

7. Presse selon une des revendications précédentes, **caractérisée en ce que** l'unité de travail (32) présente un dispositif d'emboutissage (20) destiné au réglage d'une valeur de force d'emboutissage (F) et/ou d'une variation de force d'emboutissage (F, Z), la valeur de force d'emboutissage (F) et/ou la variation de force d'emboutissage (F, Z) étant caractérisée respectivement par une ou plusieurs valeurs de fonctionnement de presse (Ai).

8. Presse selon la revendication 7, **caractérisée en ce que** le dispositif d'emboutissage (20) est conçu pour le réglage de valeurs de force d'emboutissage (F, Q) et/ou de variations de force d'emboutissage (F, Z, Q) différentes, à des emplacements différents de l'outil supérieur (14) et de l'outil inférieur (15), les valeurs de force d'emboutissage (F, Q) et/ou les variations de force d'emboutissage (F, Z, Q) étant caractérisées respectivement par une ou plusieurs valeurs de fonctionnement de presse (Ai).

9. Presse selon une des revendications précédentes, **caractérisée en ce que** l'unité de travail (32) présente un dispositif de lubrification (30) qui est conçu pour appliquer un lubrifiant sur la pièce (11), avant le formage, la quantité de lubrifiant (L) du lubrifiant appliqué sur la pièce (11) étant **caractérisée par** une ou plusieurs valeurs de fonctionnement de presse (Ai).

10. Presse selon une des revendications précédentes, **caractérisée en ce que** l'unité de travail (32) qui peut être activée présente un dispositif d'entraînement (18) conçu pour déplacer l'outil supérieur (14) et l'outil inférieur (15) l'un par rapport à l'autre, et **en ce que** le dispositif d'entraînement (18) est conçu pour le réglage de la position et/ou d'une dérivée de la position en fonction du temps de l'outil supérieur (14) et/ou de l'outil inférieur (15), la position et/ou une dérivée de la position en fonction du temps étant caractérisées respectivement par une ou plusieurs valeurs de fonctionnement de presse (Ai).

11. Presse selon une des revendications précédentes, **caractérisée en ce qu'**au moins un des paramètres de pièce (P1 à Pm) décrit une dimension de la pièce (11) mise en forme.

12. Presse selon une des revendications précédentes, **caractérisée en ce qu'**au moins un des paramètres de pièce (P1 à Pm) indique si des ondulations ou des plis sont présents dans une portion de surface de la pièce (11) mise en forme.

13. Presse selon une des revendications précédentes, **caractérisée en ce qu'**au moins un des paramètres de pièce (P1 à Pm) indique s'il existe au moins une fissure dans une portion de surface de la pièce (11) mise en forme.

14. Procédé pour faire fonctionner une presse (10) comprenant un outil supérieur (14) et un outil inférieur (15) qui coopèrent en vue du formage d'une pièce (11), plusieurs paramètres de pièce (P1 à Pm) caractérisant la pièce (11) à former ou ayant été formée, et comprenant une unité de travail (32) qui peut être activée par un dispositif de commande (31) et exécute l'opération de formage de la pièce (11), sur la base de valeurs de fonctionnement de presse (A1 à An), **caractérisé en ce que** dans le dispositif de commande (31), est enregistrée une matrice logique (34) qui contient pour chacune des valeurs de fonctionnement de presse (A1 à An) respectivement une fonction (fij) modifiable individuellement pour chacun des paramètres de pièce (P1 à Pm), qui décrit la relation entre la valeur de fonctionnement de presse (Ai) respective et un paramètre de pièce (Pj) respectif du paramètre de pièce (P1 à Pm), au nombre d'au moins un,
les valeurs de fonctionnement de presse (Ai à An) étant déterminées sur la base de l'ensemble des fonctions (f11 à fnm) et étant transmises à l'unité de travail (32) qui exécute l'opération de formage sur la base des valeurs de fonctionnement de presse (A1 à An) respectives actuelles.
